# FASCICULE DE BREVET EUROPEEN

(11) **EP 2 640 235 B1**
(45) Date de publication et mention de la délivrance du brevet: **20.02.2019**
(21) Numéro de dépôt: 11794831.5
(22) Date de dépôt: 18.11.2011
(51) Int. Cl.: A47J 36/02, B05D 5/08

(54) **PROCEDE D'OBTENTION D'UN RECIPIENT DE CUISSON COMPORTANT UNE FACE EXTERIEURE ANODISEE DURE COLOREE**
VERFAHREN ZUR HERSTELLUNG EINES KOCHGEFÄSSES MIT FARBIGER, HARTER, ANODISIERTER AUSSENFLÄCHE
METHOD FOR OBTAINING A COOKING VESSEL HAVING A COLOURED, HARD, ANODIZED OUTER SURFACE

(30) Priorité: 19.11.2010 FR 1059522
(43) Date de publication de la demande: 25.09.2013
(73) Titulaire: SEB S.A., 69130 Ecully (FR)
(72) Inventeur: RUBIO, Martin, F-74150 Rumilly (FR); TUFFE, Stéphane, F-73160 Cognin (FR); BERRUX, Aurélien, F-73290 La Motte Servolex (FR)
(74) Mandataire: Bourrières, Patrice
(86) Numéro de dépôt international: PCT/FR2011/052690
(87) Numéro de publication internationale: WO 2012/066253

(56) Documents cités:
- EP-A1- 1 894 502
- US-A1- 2003 138 661
- US-A1- 2010 047 556

## Description

La présente invention concerne le domaine technique des appareils et ustensiles de cuisson comportant un récipient de cuisson.

La présente invention concerne plus particulièrement, mais non exclusivement, les articles culinaires tels que les casseroles, les poêles ou les woks, ainsi que les appareils électriques de cuisson comportant une cuve destinée à contenir les aliments.

Il est connu du document GB 1 099 486 de réaliser des récipients de cuisson en aluminium présentant une couche superficielle d'anodisation dure. Cette couche superficielle peut si désiré être pigmentée. La surface ainsi obtenue est plus facile à nettoyer qu'une surface non anodisée. Toutefois la surface ainsi obtenue est moins facile à nettoyer qu'une surface revêtue d'une couche anti-adhésive.

Le document EP 0 424 072 et le document EP 0 902 105 proposent de réaliser des récipients de cuisson comportant un revêtement antiadhérent tel que du PTFE sur un support en aluminium présentant une anodisation dure. L'anodisation dure est donc réalisée préalablement au revêtement PTFE. Cette disposition permet d'améliorer la résistance à l'usure et aux rayures du revêtement PTFE. Usuellement, le revêtement PTFE est utilisé principalement pour revêtir la face intérieure des récipients de cuisson, du fait de la résistance mécanique limitée de ce type de revêtement.

Il est connu du document EP 1 894 502 de réaliser un revêtement sol-gel sur au moins une face d'un article culinaire comportant un support en aluminium ou en alliage d'aluminium, ce support pouvant être en aluminium anodisé. Ce document envisage une épaisseur de couche d'anodisation comprise entre 5 et 100µm. L'autre face peut si désiré être revêtue de PTFE. Le revêtement sol-gel permet d'améliorer la tenue au lave-vaisselle du récipient de cuisson, ainsi que la tenue à la flamme du récipient de cuisson.

Il est connu du document US2003138661 de réaliser un revêtement sol-gel sur une face extérieure d'un article culinaire comportant un support en aluminium anodisé.

Un but de la présente invention est de proposer des colorations de la surface extérieure anodisée d'un récipient de cuisson, qui présentent un caractère durable.

Un autre but de la présente invention est de proposer des colorations de la surface extérieure anodisée d'un récipient de cuisson, qui soient susceptibles de résister aux agents lessiviels utilisés dans les lave-vaisselle.

Un autre but de la présente invention est de proposer des colorations de la surface extérieure anodisée d'un récipient de cuisson, qui soient susceptibles de résister à la flamme utilisée pour réaliser les cuissons.

Un but additionnel de la présente invention est de proposer des colorations de la surface extérieure anodisée d'un récipient de cuisson, qui soient compatibles avec un revêtement PTFE de la surface intérieure dudit récipient de cuisson.

Ces buts sont atteints avec un procédé d'obtention d'un récipient de cuisson comportant les étapes suivantes :
- réalisation d'une cuve présentant une face extérieure en aluminium et une face intérieure,
- réalisation d'une anodisation dure d'au moins la face extérieure de la cuve,
- réalisation d'un revêtement sol-gel sur la face extérieure anodisée,
dans lequel au moins une étape de coloration est réalisée sur la face extérieure anodisée après l'anodisation dure et avant l'étape de revêtement sol-gel, la ou l'une des étapes de coloration utilisant un bain de coloration comportant des pigments minéraux et/ou des pigments organiques et/ou des colorants organiques, pour piéger les pigments minéraux et/ou les pigments organiques et/ou les colorants organiques dans la couche anodisée dure.

Ces dispositions permettent de protéger les pigments et/ou les colorants utilisés dans la ou les étapes de coloration en les piégeant dans la couche anodisée dure. Une coloration durable peut ainsi être obtenue.

Un piégeage des pigments et/ou des colorants dans la couche anodisée dure peut ainsi être obtenu, grâce à la porosité de ladite couche anodisée dure.

L'étape de revêtement sol-gel peut utiliser des pigments minéraux et/ou des pigments organiques et/ou des colorants organiques en vue de coloration. Un piégeage des pigments et/ou des colorants dans le revêtement sol-gel peut ainsi être obtenu.

Selon une forme de réalisation préférée, ledit procédé comporte une étape de réalisation d'un revêtement PTFE sur la face intérieure de la cuve. Si désiré l'étape de réalisation d'un revêtement PTFE peut comporter une préparation de surface ainsi que le dépôt d'une ou plusieurs couches intermédiaires. Le revêtement PTFE peut notamment être réalisé par enduction.

Alors, selon un mode de réalisation, l'étape de réalisation d'une anodisation dure de la face extérieure de la cuve intervient après l'étape de réalisation d'un revêtement PTFE sur la face intérieure de la cuve. L'anodisation effectuée après le revêtement PTFE présente l'avantage de n'anodiser que la face extérieure de la cuve, ce qui permet de réduire le temps de traitement, de diminuer la consommation de courant et d'acide par rapport à l'anodisation de la face extérieure et de la face intérieure de la cuve. De plus le PTFE supporte bien le bain d'acide sulfurique usuellement utilisé pour réaliser l'anodisation. La coloration réalisée après les étapes de revêtement PTFE et d'anodisation dure permet d'utiliser une gamme plus étendue de pigments et/ou colorants, notamment de pigments et/ou colorants organiques, grâce à l'utilisation de températures plus faibles pour la réalisation du revêtement sol-gel que pour la réalisation du revêtement PTFE.

Si désiré, le procédé comporte une étape de réalisation d'une anodisation dure préliminaire de la face extérieure et de la face intérieure de la cuve avant l'étape de réalisation d'un revêtement PTFE sur la face intérieure de la cuve, l'étape de réalisation d'une anodisation dure de la face extérieure de la cuve intervenant après une étape de décapage de la face extérieure de la cuve postérieure à l'étape de réalisation d'un revêtement PTFE sur la face intérieure de la cuve. Ce traitement d'anodisation dure préliminaire concerne la face intérieure et la face extérieure de la cuve et permet d'obtenir une base dure avant la réalisation de revêtement PTFE.

Selon un autre mode de réalisation, l'étape de réalisation d'une anodisation dure de la face extérieure de la cuve intervient avant l'étape de réalisation d'un revêtement PTFE sur la face intérieure de la cuve. Ce traitement d'anodisation dure concerne la face intérieure et la face extérieure de la cuve et permet d'obtenir une base dure avant la réalisation de revêtement PTFE. Par rapport à un traitement d'anodisation dure préliminaire suivi d'une anodisation dure de la face extérieure après la réalisation du revêtement PTFE, le procédé proposé permet de diminuer le nombre d'étapes mais impose d'utiliser des pigments ou colorants susceptibles de résister aux températures rencontrées lors de la réalisation du revêtement PTFE, notamment des pigments minéraux. Le choix de couleurs est alors plus réduit.

Ce but est atteint aussi avec un récipient de cuisson comportant une cuve présentant une face extérieure en aluminium ainsi qu'une face intérieure, au moins la face extérieure étant anodisée, un revêtement sol-gel étant réalisé sur la face extérieure anodisée, la face extérieure étant anodisée dure pour obtenir une couche anodisée dure, du fait que la face extérieure anodisée dure est colorée avec des pigments minéraux et/ou des pigments organiques et/ou des colorants organiques piégés dans la couche anodisée dure.

Selon un mode de réalisation avantageux, la cuve est obtenue par emboutissage d'un substrat présentant au moins une face en aluminium, ladite face formant alors la face extérieure de la cuve.

Alors, selon une forme de réalisation, le substrat présente deux faces en aluminium. Le substrat peut notamment être en aluminium massif, ou en colaminé présentant deux faces en aluminium et une âme en acier. Si désiré l'acier peut être choisi parmi les aciers inoxydables.

Alors, selon une autre forme de réalisation, le substrat est formé par un colaminé présentant une face en aluminium et une face en acier inoxydable, cette face en acier inoxydable étant avantageusement destinée à être revêtue de PTFE.

Selon un autre mode de réalisation avantageux, la cuve est réalisée en fonte d'aluminium.

Selon une forme de réalisation avantageuse, la face extérieure de la cuve présente une surface brossée ou microbillée. Le traitement d'anodisation est un traitement de surface, dans lequel la matière de la surface est modifiée, et non un revêtement de surface, dans lequel une ou plusieurs couches sont ajoutées sur une surface existante. Le traitement d'anodisation dure n'est pas limité aux états de surfaces lisses ou polis, une anodisation peut notamment être envisagée sur une surface brossée ou microbillée.

Avantageusement, pour obtenir un récipient de cuisson compatible induction, la cuve comporte au moins un insert réalisé en matériau ferromagnétique.

Ce but est atteint aussi avec un article culinaire comportant un récipient de cuisson et un organe de préhension fixé sur ledit récipient de cuisson par au moins un rivet ou par soudage, ledit récipient de cuisson étant conforme à l'une au moins des caractéristiques précitées.

Ce but est atteint aussi avec un appareil électrique de cuisson, comportant un récipient de cuisson associé à des moyens de chauffe, ledit récipient de cuisson étant conforme à l'une au moins des caractéristiques précitées.

L'invention sera mieux comprise à l'étude d'exemples de réalisation, pris à titre nullement limitatif, illustrés dans les figures annexées, dans lesquelles :
- la figure 1 illustre un récipient de cuisson 1 selon l'invention,
- la figure 2 illustre un article culinaire 100 comportant un récipient de cuisson 1 selon l'invention,
- la figure 3 illustre de manière schématique un appareil électrique de cuisson 200 comportant un récipient de cuisson 1 selon l'invention.

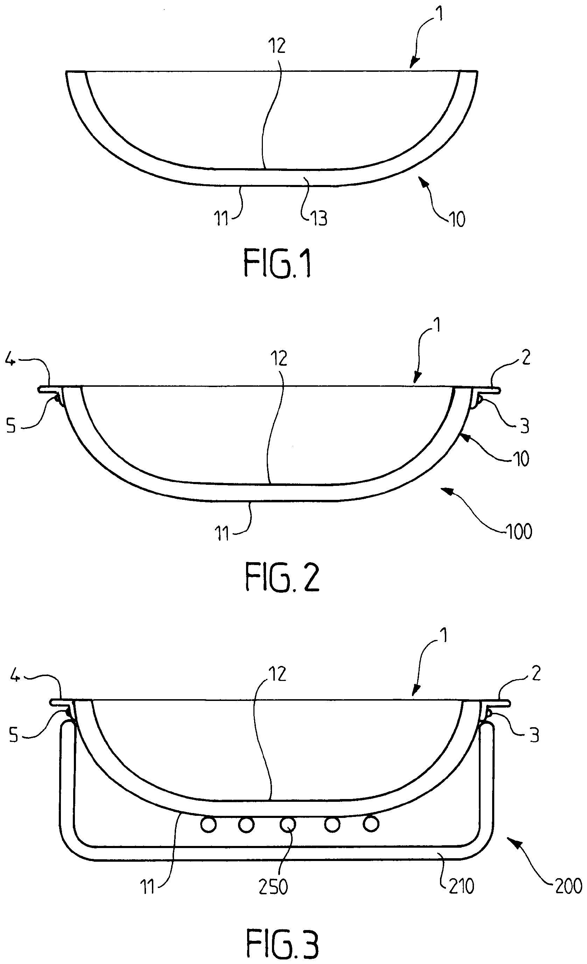

Le récipient de cuisson 1 illustré sur les figures 1 et 2 comporte une cuve 10 présentant une face extérieure 11 en aluminium ainsi qu'une face intérieure 12.

Selon un mode de réalisation, la cuve 10 est obtenue par emboutissage d'un substrat 13 présentant au moins une face en aluminium destinée à former la face extérieure 11 de la cuve 10.

Selon une forme de réalisation, le substrat 13 présente deux faces en aluminium destinées à former respectivement la face extérieure 11 et la face intérieure 12 de la cuve 10.

Si désiré, le substrat 13 peut être en aluminium massif. Un alliage d'aluminium 3003 peut notamment être utilisé à cet effet. Le substrat 13 utilisé pour former la cuve 10 est alors découpé dans une tôle d'aluminium.

Selon une autre forme de réalisation, le substrat 13 est formé par un colaminé présentant une face en aluminium et une face en acier inoxydable, la face en aluminium étant destinée à former la face extérieure 11 de la cuve, la face en acier inoxydable étant destinée à former la face intérieure 12 de la cuve 10.

Selon autre un mode de réalisation, la cuve 10 est réalisée en fonte d'aluminium, par exemple avec un alliage d'aluminium AlSi12.

Si désiré, la face extérieure 11 de la cuve 10 n'est pas nécessairement lisse ou polie, mais peut notamment présenter une surface brossée ou microbillée.

Si désiré la cuve 10 peut comporter au moins un insert réalisé en matériau ferromagnétique, tel que par exemple un acier ferritique, pour réaliser un récipient de cuisson 1 susceptible d'être chauffé par induction. De préférence le matériau ferromagnétique est un acier inoxydable ferritique. Si désiré l'insert réalisé en matériau ferromagnétique peut être formé par une plaque comportant une ou plusieurs perforations. L'insert est avantageusement assemblé par frappe à chaud ou à froid avec l'aluminium du substrat 13 ou est recouvert d'aluminium moulé, la ou les perforations étant de préférence remplies par l'aluminium. L'insert réalisé en matériau ferromagnétique peut présenter au moins une partie apparente, qu'il convient de protéger par un masquage dans les bains chimiques acides, tels que notamment le ou les bains d'anodisation.

Le récipient de cuisson 1 selon l'invention est obtenu selon un procédé comportant les étapes suivantes :
- réalisation d'une cuve 10 présentant une face extérieure 11 en aluminium et une face intérieure 12,
- réalisation d'une anodisation dure d'au moins la face extérieure 11 de la cuve 10,
- réalisation d'un revêtement sol-gel sur la face extérieure 11 anodisée,
dans lequel au moins une étape de coloration est réalisée après l'anodisation dure, la ou les étapes de coloration étant réalisées avant et/ou pendant l'étape de revêtement sol-gel.

Plus précisément, la ou lesdites étapes de coloration réalisées après l'anodisation dure est/sont réalisée(s) sur la face extérieure anodisée après l'anodisation dure de ladite face extérieure anodisée.

Le procédé comporte avantagement une étape de réalisation d'un revêtement PTFE sur la face intérieure de la cuve. L'étape de réalisation du revêtement PTFE peut notamment être réalisée par enduction. Si désiré, l'étape de réalisation du revêtement PTFE peut utiliser un PTFE chargé, pour améliorer la résistance de la surface de la face intérieure 12 de la cuve 10 revêtue PTFE. Des particules minérales peuvent notamment être utilisées comme charge de renfort. Pour obtenir la surface de cuisson en PTFE, le revêtement PTFE est chauffé à une température dépassant 400°C (usuellement de l'ordre de 420°C).

Selon un mode de réalisation, l'étape de réalisation d'une anodisation dure de la face extérieure 11 de la cuve 10 intervient avant l'étape de réalisation du revêtement PTFE sur la face intérieure 12 de la cuve 10. L'obtention d'un revêtement PTFE après anodisation dure est notamment divulguée dans le document EP 0 902 105. Cette disposition permet d'obtenir une base dure améliorant la résistance mécanique du revêtement PTFE. Les températures nécessaires à la finition du revêtement PTFE limitent toutefois les possibilités de coloration, peu de produits colorés tenant aux températures précitées.

Selon un autre mode de réalisation, l'étape de réalisation d'une anodisation dure de la face extérieure 11 de la cuve 10 intervient après l'étape de réalisation du revêtement PTFE sur la face intérieure 12 de la cuve 10. Un avantage de cette réalisation réside dans la possibilité d'utiliser une gamme plus étendue de produits colorés, tels que des pigments minéraux, mais aussi des pigments organiques ou des colorants organiques.

Si désiré, une étape de réalisation d'une anodisation dure préliminaire de la face extérieure 11 et de la face intérieure 12 de la cuve 10 peut être envisagée avant l'étape de réalisation d'un revêtement PTFE sur la face intérieure 12 de la cuve 10. Ce traitement préalable d'anodisation dure permet d'obtenir une base dure sous le revêtement PTFE. Toutefois un décapage de la face extérieure 11 de la cuve 10 est alors nécessaire pour réanodiser ladite face extérieure 11 avant de procéder à une étape de coloration si cette étape de coloration n'est pas limitée à l'utilisation d'un revêtement sol-gel coloré. L'étape de réalisation d'une anodisation dure de la face extérieure 11 de la cuve 10 intervient alors après une étape de décapage de la face extérieure 11 de la cuve 10 postérieure à l'étape de réalisation d'un revêtement PTFE sur la face intérieure 12 de la cuve 10.

Si désiré, une préparation de surface avant l'anodisation dure peut comporter un dégraissage de type acide ou basique et/ou un décapage de type acide ou basique, et/ou une neutralisation à l'HNO₃. Un dégraissage de quelques minutes dans un bain de NaOH de concentration 50g/l à une température de l'ordre de 50°C donne des résultats satisfaisants.

Le traitement d'anodisation dure peut notamment être réalisé par trempage dans un bain. Le traitement d'anodisation préliminaire peut aussi être réalisé par trempage dans un bain. L'anodisation dure présente l'avantage d'une bonne résistance aux rayures et aux chocs. Une gamme de matériaux plus étendue peut ainsi être envisagée pour la réalisation de la cuve 10, par rapport à un émaillage, tout en conservant les propriétés de nettoyage conférées par le revêtement PTFE de la face intérieure 12 de la cuve 10.

L'anodisation dure peut par exemple être obtenue avec un bain de H₂SO₄ de concentration 130g/l pendant 90 min à une température de l'ordre de 10°C avec une densité courant de l'ordre de 1,8A/dm². Des températures plus basses autour de 0°C avec une densité de courant supérieure permettent de réduire le temps de traitement.

Une couche anodisée dure présentant une épaisseur comprise entre 10 µm et 30 µm présente une dureté d'environ 350 Hv et donne des résultats satisfaisants tant pour la tenue mécanique que pour les possibilités de coloration.

Selon une caractéristique préférée, la face extérieure 11 anodisée comporte des pores de taille inférieure à 30nm et de préférence inférieure à 20nm.

Selon un mode de réalisation, l'étape de coloration utilise par exemple un bain de coloration comportant des pigments minéraux et/ou des pigments organiques et/ou des colorants organiques. Les pigments minéraux présentent une bonne tenue à la température pouvant dépasser 300°C, voire 400°C (tel que par exemple le jaune Orminal Gold4N de Clariant). Certains des pigments minéraux sont donc adaptés à la réalisation d'une coloration de la face extérieure 11 de la cuve 10 avant la réalisation d'un revêtement PTFE de la face intérieure 12 de la cuve 10. Les pigments organiques et/ou les colorants organiques présentent usuellement une tenue à la température moins bonne que celle des pigments minéraux, toutefois les gammes de couleurs disponibles sont plus larges avec les pigments organiques et les colorants organiques qu'avec les pigments minéraux. Des couleurs jaune, vert, rouge, marron, bleu ou brun clair peuvent ainsi être obtenues. Les pigments organiques et/ou les colorants organiques sont davantage adaptés à la réalisation d'une coloration de la face extérieure 11 de la cuve 10 après la réalisation d'un revêtement PTFE de la face intérieure 12 de la cuve 10.

La coloration de la couche d'anodisation dure pourra être obtenue par le biais de sels métalliques composés d'au moins un ion métallique et un contre-ion. Les ions métalliques sont de préférence choisis parmis les métaux de transition. Les contre-ions, ou ligands, sont parfaitement solubles en milieu aqueux ou solvant et facilitent la pénétration des ions métalliques dans les porosités de la couche d'anodisation dure. Les ions métalliques sont ensuite oxydés par le biais d'un traitement thermique classique afin d'obtenir un oxyde développant la teinte souhaitée. Le titrage et le type de sels métalliques utilisés seront fonction de la teinte et du pouvoir colorant souhaités, mais aussi des facilités de manipulation, de stockage, et du coût.

Le procédé comporte une étape de revêtement sol-gel sur la face extérieure anodisée. L'étape de revêtement sol-gel intervient après l'étape d'anodisation dure de la face extérieure 11 de la cuve 10. Ce revêtement sol-gel permet d'utiliser une gamme plus étendue de pigments et/ou colorants, notamment des pigments organiques ou des colorants organiques, en permettant une meilleure tenue à la flamme de la face extérieure 11 de la cuve 10. Ce revêtement sol-gel permet également d'obtenir un récipient de cuisson susceptible de résister aux agents lessiviels utilisés dans les lave-vaisselle. Le revêtement sol-gel peut notamment être réalisé selon le procédé décrit dans le document EP 1 894 502. Pour la cuisson du revêtement sol-gel une température de l'ordre de 300°C est préférée. Cette température permet de conférer une bonne compacité du revêtement sol-gel favorisant la tenue à l'abrasion, une bonne tenue à la flamme ainsi qu'une bonne tenue au lave-vaisselle. Cette température n'est pas excessive et ne dégrade pas le PTFE. Cette température est également compatible avec l'utilisation de pigments organiques et/ou de colorants organiques.

Si désiré, l'étape de revêtement sol-gel peut utiliser des pigments minéraux et/ou des pigments organiques et/ou des colorants organiques en vue de coloration, un seul type de colorant ou de pigment pouvant être utilisé. Le revêtement sol-gel peut ainsi être coloré par l'ajout de pigments et/ou de colorants afin d'obtenir la coloration souhaitée, en alternative ou en complément à l'étape de coloration entre l'anodisation dure de la face extérieure 11 de la cuve 10 et le revêtement sol-gel de la face extérieure 11 de la cuve 10 anodisée dure.

Si désiré, l'étape de revêtement PTFE et l'étape de revêtement sol-gel peuvent comporter au moins une cuisson commune.

Le procédé selon l'invention peut notamment comporter les exemples de réalisation suivants :
Exemple 1 : enduction PTFE de la face intérieure 12, anodisation dure de la face extérieure 11, coloration de la face extérieure 11 anodisée dure, sol-gel transparent pour revêtir la face extérieure 11 anodisée dure colorée.
Exemple 2 : enduction PTFE de la face intérieure 12, anodisation dure de la face extérieure 11, sol-gel coloré pour revêtir la face extérieure 11 anodisée dure.
Exemple 3 : enduction PTFE de la face intérieure 12, anodisation dure de la face extérieure 11, coloration de la face extérieure 11 anodisée dure, sol-gel coloré pour revêtir la face extérieure 11 anodisée dure colorée.
Exemple 4 : anodisation dure préliminaire bi-face de la cuve 10 pour obtenir une base dure, enduction PTFE de la face intérieure 12, anodisation dure de la face extérieure 11, coloration de la face extérieure 11 anodisée dure, sol-gel transparent pour revêtir la face extérieure 11 anodisée dure colorée.
Exemple 5 : anodisation dure préliminaire bi-face de la cuve 10 pour obtenir une base dure, enduction PTFE de la face intérieure 12, sol-gel coloré pour revêtir la face extérieure 11 anodisée dure.
Exemple 6 : anodisation dure préliminaire bi-face de la cuve 10 pour obtenir une base dure, enduction PTFE de la face intérieure 12, anodisation dure de la face extérieure 11, coloration de la face extérieure 11 anodisée dure, sol-gel coloré pour revêtir la face extérieure 11 anodisée dure colorée.
Exemple 7 : anodisation dure bi-face de la cuve 10 pour obtenir une base dure, coloration de la face extérieure 11 et de la face intérieure 12 anodisées dures, enduction PTFE de la face intérieure 12, sol-gel transparent pour revêtir la face extérieure 11 anodisée dure colorée.
Exemple 8 : anodisation dure bi-face de la cuve 10 pour obtenir une base dure, coloration de la face extérieure 11 et de la face intérieure 12 anodisées dures, enduction PTFE de la face intérieure 12, sol-gel coloré pour revêtir la face extérieure 11 anodisée dure colorée.
Exemple 9 : anodisation dure bi-face de la cuve 10 pour obtenir une base dure, coloration de la face extérieure 11 et de la face intérieure 12 anodisées dures, enduction PTFE de la face intérieure 12, anodisation dure de la face extérieure 11, coloration de la face extérieure 11 anodisée dure, sol-gel coloré pour revêtir la face extérieure 11 anodisée dure colorée.
Exemple 10 : anodisation dure bi-face de la cuve 10 pour obtenir une base dure, coloration de la face extérieure 11 et de la face intérieure 12 anodisées dures, sol-gel transparent pour revêtir la face extérieure 11 anodisée dure colorée.
Exemple 11 : anodisation dure bi-face de la cuve 10 pour obtenir une base dure, coloration de la face extérieure 11 et de la face intérieure 12 anodisées dures, sol-gel coloré pour revêtir la face extérieure 11 anodisée dure colorée.
Exemple 12 : anodisation dure bi-face de la cuve 10 pour obtenir une base dure, sol-gel coloré pour revêtir la face extérieure 11 anodisée dure colorée.

La figure 2 illustre un article culinaire 100 comportant un récipient de cuisson 1 et un organe de préhension 2 fixé sur ledit récipient de cuisson 1 par au moins un rivet 3. A cet effet le rivet 3 est monté dans un trou ménagé dans la cuve 10 du récipient de cuisson 1. Si désiré plusieurs rivets 3 peuvent être utilisés pour fixer l'organe de préhension 2 sur le récipient de cuisson 1. De préférence entre deux et quatre rivets 3 sont utilisés pour fixer l'organe de préhension 2 sur le récipient de cuisson 1. En alternative l'organe de préhension 2 pourrait être fixé sur ledit récipient de cuisson 1 par soudage. Si désiré un autre organe de préhension 4 peut être fixé sur ledit récipient de cuisson 1 par au moins un autre rivet 5 ou par soudage.

La figure 3 illustre un appareil électrique de cuisson 200, comportant un récipient de cuisson 1 associé à des moyens de chauffe 250. Le récipient de cuisson 1 forme une cuve agencée dans une base chauffante 210 comportant les moyens de chauffe 250. La face extérieure 11 de la cuve 10 repose sur les moyens de chauffe 250. Si désiré la face extérieure 11 peut être solidaire des moyens de chauffe 250.

A titre de variante, la face intérieure 12 de la cuve 10 n'est pas nécessairement revêtue de PTFE, d'autres types de revêtement peuvent être envisagés si désiré.

A titre de variante, la face intérieure 12 de la cuve 10 n'est pas nécessairement revêtue. Si désiré la face intérieure 12 de la cuve 10 peut notamment être polie.

La présente invention n'est nullement limitée aux exemples de réalisation décrits, mais englobe de nombreuses modifications dans le cadre des revendications.

## Revendications

1. Procédé d'obtention d'un récipient de cuisson (1), comportant les étapes suivantes :
- réalisation d'une cuve (10) présentant une face extérieure (11) en aluminium et une face intérieure (12),
- réalisation d'une anodisation dure d'au moins la face extérieure (11) de la cuve (10),
- réalisation d'un revêtement sol-gel sur la face extérieure (11) anodisée, **caractérisé en ce qu'**au moins une étape de coloration est réalisée sur la face extérieure anodisée après l'anodisation dure et avant l'étape de revêtement sol-gel, **en ce que** la ou l'une des étapes de coloration utilise un bain de coloration comportant des pigments minéraux et/ou des pigments organiques et/ou des colorants organiques, pour piéger les pigments minéraux et/ou les pigments organiques et/ou les colorants organiques dans la couche anodisée dure.

2. Procédé d'obtention d'un récipient de cuisson (1) selon la revendication 1, **caractérisé en ce que** l'étape de revêtement sol-gel utilise des pigments minéraux et/ou des pigments organiques et/ou des colorants organiques en vue de coloration.

3. Procédé d'obtention d'un récipient de cuisson (1) selon l'une des revendications 1 ou 2, **caractérisé en ce qu'**il comporte une étape de réalisation d'un revêtement PTFE sur la face intérieure (12) de la cuve (10) et **en ce que** l'étape de réalisation d'une anodisation dure de la face extérieure (11) de la cuve (10) intervient après l'étape de réalisation d'un revêtement PTFE sur la face intérieure (12) de la cuve (10).

4. Procédé d'obtention d'un récipient de cuisson (1) selon la revendication 3, **caractérisé en ce qu'**il comporte une étape de réalisation d'une anodisation dure préliminaire de la face extérieure (11) et de la face intérieure (12) de la cuve (10) avant l'étape de réalisation d'un revêtement PTFE sur la face intérieure (12) de la cuve (10) et **en ce que** l'étape de réalisation d'une anodisation dure de la face extérieure (11) de la cuve (10) intervient après une étape de décapage de la face extérieure (11) de la cuve (10) postérieure à l'étape de réalisation d'un revêtement PTFE sur la face intérieure (12) de la cuve (10).

5. Procédé d'obtention d'un récipient de cuisson (1) selon l'une des revendications 1 ou 2, **caractérisé en ce qu'**il comporte une étape de réalisation d'un revêtement PTFE sur la face intérieure (12) de la cuve (10) et **en ce que** l'étape de réalisation d'une anodisation dure de la face extérieure (11) de la cuve (10) intervient avant l'étape de réalisation d'un revêtement PTFE sur la face intérieure (12) de la cuve (10).

6. Récipient de cuisson (1) comportant une cuve (10) présentant une face extérieure (11) en aluminium ainsi qu'une face intérieure (12), au moins la face extérieure (11) étant anodisée, un revêtement sol-gel étant réalisé sur la face extérieure (11) anodisée, où la face extérieure (11) est anodisée dure pour obtenir une couche anodisée dure, et **caractérisé en ce que** la face extérieure (11) anodisée dure est colorée avec des pigments minéraux et/ou des pigments organiques et/ou des colorants organiques piégés dans la couche anodisée dure, avant l'étape de revêtement sol-gel.

7. Récipient de cuisson (1) selon la revendication 6, **caractérisé en ce que** la cuve (10) est obtenue par emboutissage d'un substrat (13) présentant au moins une face en aluminium.

8. Récipient de cuisson (1) selon la revendication 7, **caractérisé en ce que** le substrat (13) présente deux faces en aluminium.

9. Récipient de cuisson (1) selon l'une des revendications 7 ou 8, **caractérisé en ce que** le substrat (13) est en aluminium massif.

10. Récipient de cuisson (1) selon la revendication 7, **caractérisé en ce que** le substrat (13) est formé par un colaminé présentant une face en aluminium et une face en acier inoxydable.

11. Récipient de cuisson (1) selon la revendication 6, **caractérisé en ce que** la cuve (10) est réalisée en fonte d'aluminium.

12. Récipient de cuisson (1) selon l'une des revendications 6 à 11, **caractérisé en ce que** la face extérieure (11) de la cuve (10) présente une surface brossée ou microbillée.

13. Récipient de cuisson (1) selon l'une des revendications 6 à 12, **caractérisé en ce que** la cuve (10) comporte au moins un insert réalisé en matériau ferromagnétique.

14. Article culinaire (100) comportant un récipient de cuisson (1) et un organe de préhension (2) fixé sur ledit récipient de cuisson (1) par au moins un rivet (3) ou par soudage, **caractérisé en ce que** ledit récipient de cuisson (1) est conforme à l'une des revendications 6 à 13.

15. Appareil électrique de cuisson (200), comportant un récipient de cuisson (1) associé à des moyens de chauffe (250), **caractérisé en ce que** ledit récipient de cuisson (1) est conforme à l'une des revendications 6 à 13.

## Patentansprüche

1. Verfahren zum Erhalt eines Kochgefäßes (1), umfassend die folgenden Schritte:
- Realisierung eines Behälters (10), der eine Außenfläche (11) aus Aluminium und eine Innenfläche (12) aufweist,
- Realisierung einer Harteloxierung von zumindest der Außenfläche (11) des Behälters (10),
- Realisierung einer Sol-Gel-Beschichtung auf der eloxierten Außenfläche (11),
**dadurch gekennzeichnet, dass** mindestens ein Schritt zur Färbung auf der eloxierten Außenfläche nach der Harteloxierung und vor dem Schritt zur Sol-Gel-Beschichtung durchgeführt wird, dass der oder der eine der Färbeschritte ein Färbungsbad verwendet, das mineralische Pigmente und/oder organische Pigmente und/oder organische Farbstoffe aufweist, um die mineralischen Pigmente und/oder die organischen Pigmente und / oder die organischen Farbstoffe in der harteloxierten Schicht einzufangen.

2. Verfahren zum Erhalt eines Kochgefäßes (1) nach Anspruch 1, **dadurch gekennzeichnet, dass** der Schritt zur Sot-Gel- Beschichtung mineralische Pigmente und / oder organische Pigmente und / oder organische Farbstoffe für die Färbung verwendet.

3. Verfahren zum Erhalt eines Kochgefäßes (1) nach einem der Ansprüche 1 oder 2, **dadurch gekennzeichnet, dass** es einen Schritt zur Realisierung einer PTFE-Beschichtung auf der Innenfläche (12) des Behälters (10) aufweist, und dass der Schritt zur Realisierung einer Harteloxierung der Außenfläche (11) des Behälters (10) nach dem Schritt zur Realisierung einer PTFE-Beschichtung auf der Innenfläche (12) des Behälters (10) erfolgt.

4. Verfahren zum Erhalt eines Kochgefäßes (1) nach Anspruch 3, **dadurch gekennzeichnet, dass** es einen Schritt zur Realisierung einer vorläufigen Harteloxierung der Außenfläche (11) und der Innenfläche (12) des Behälters (10) vor dem Schritt zur Realisierung einer PTFE-Beschichtung auf der Innenfläche (12) des Behälters (10) umfasst, und dass der Schritt zur Realisierung einer Harteloxierung der Außenfläche (11) des Behälters (10) nach einem Schritt zum Abstreifen der Außenfläche (11) des Behälters (10) hinter dem Schritt zur Realisierung einer PTFE-Beschichtung auf der Innenfläche (12) des Behälters (10) erfolgt.

5. Verfahren zum Erhalt eines Kochgefäßes (1) nach einem der Ansprüche 1 oder 2, **dadurch gekennzeichnet, dass** es einen Schritt zur Realisierung einer PTFE-Beschichtung auf der Innenfläche (12) des Behälters (10) aufweist, und dass der Schritt zur Realisierung einer Harteloxierung der Außenfläche (11) des Behälters (10) vor dem Schritt zur Realisierung einer PTFE-Beschichtung auf der Innenfläche (12) des Behälters (10) erfolgt.

6. Kochgefäß (1), umfassend einen Behälter (10), der eine Außenfläche (11) aus Aluminium sowie eine Innenfläche (12) aufweist, wobei mindestens die Innenfläche (11) eloxiert ist, wobei eine Sol-Gel-Beschichtung auf der eloxierten Außenfläche (11) realisiert ist, wobei die Außenfläche (11) harteloxiert ist, um eine harteloxierte Schicht zu erhalten, und **dadurch gekennzeichnet,**
**dass** die harteloxierte Außenfläche (11) mit mineralischen Pigmenten und/oder organischen Pigmenten und/oder organischen Farbstoffen gefärbt ist, die in der harteloxierten Schicht vor dem Schritt zur Sol-Gel-Beschichtung eingefangen sind.

7. Kochgefäß (1) nach Anspruch 6, **dadurch gekennzeichnet, dass** der Behälter (10) durch Stanzen eines Substrats (13), das mindestens eine Fläche aus Aluminium aufweist, erhalten wird.

8. Kochgefäß (1) nach Anspruch 7, **dadurch gekennzeichnet, dass** das Substrat (13) zwei Flächen aus Aluminium aufweist.

9. Kochgefäß (1) nach einem der Ansprüche 7 oder 8, **dadurch gekennzeichnet, dass** das Substrat (13) aus massivem Aluminium ist.

10. Kochgefäß (1) nach Anspruch 7, **dadurch gekennzeichnet, dass** das Substrat (13) durch ein Colaminat gebildet ist, das eine Fläche aus Aluminium und eine Fläche aus rostfreiem Stahl aufweist.

11. Kochgefäß (1) nach Anspruch 6, **dadurch gekennzeichnet, dass** das Gefäß (10) aus Aluminiumguss realisiert ist.

12. Kochgefäß (1) nach einem der Ansprüche 6 bis 11, **dadurch gekennzeichnet, dass** die Außenfläche (11) des Gefäßes (10) eine gebürstete oder mikrogestrahlte Oberfläche aufweist.

13. Kochgefäß (1) nach einem der Ansprüche 6 bis 12, **dadurch gekennzeichnet, dass** das Gefäß (10) mindestens einen Einsatz aufweist, der aus ferromagnetischem Material realisiert ist.

14. Kochartikel (100), umfassend ein Kochgefäß (1) und ein Greifelement (2), das an dem Kochgefäß (1) durch mindestens einen Niet (3) oder durch Schweißen befestigt ist, **dadurch gekennzeichnet, dass** das Kochgefäß (1) nach einem der Ansprüche 6 bis 13 ist.

15. Elektrisches Kochgerät (200), umfassend ein Kochgefäß (1), das Heizmitteln (250) zugeordnet ist, **dadurch gekennzeichnet, dass** das Kochgefäß (1) gemäß einem der Ansprüche 6 bis 13 ist.

## Claims

1. Method for obtaining a cooking vessel (1), comprising the following steps:
- producing a container (10) having an aluminium outer face (11) and an inner face (12),
- producing a hard anodising of at least the outer face (11) of the container (10),
- producing a sol-gel coating on the anodised outer face (11), **characterised in that** at least one colouring step is carried out on the anodised outer face after hard anodising and before the sol-gel coating step, **in that** the or one of the colouring steps uses a colouring bath comprising mineral pigments and/or organic pigments and/or organic colourants, to trap the mineral pigments and/or the organic pigments and/or the organic colourants in the hard anodised layer.

2. Method for obtaining a cooking vessel (1) according to claim 1, **characterised in that** the sol-gel coating step uses mineral pigments and/or organic pigments and/or organic colourants in view of colouration.

3. Method for obtaining a cooking vessel (1) according to one of claims 1 or 2, **characterised in that** it comprises a step of producing a PTFE coating on the inner face (12) of the container (10) and **in that** the step of producing a hard anodising of the outer face (11) of the container (10) occurs after the step of producing a PTFE coating on the inner face (12) of the container (10).

4. Method for obtaining a cooking vessel (1) according to claim 3, **characterised in that** it comprises a step of producing a preliminary hard anodising of the outer face (11) and of the inner face (12) of the container (10) before the step of producing a PTFE coating on the inner face (12) of the container (10) and **in that** the step of producing a hard anodising of the outer face (11) of the container (10) occurs after a step of scraping the outer face (11) of the container (10) after the step of producing a PTFE coating on the inner face (12) of the container (10).

5. Method for obtaining a cooking vessel (1) according to one of claims 1 or 2, **characterised in that** it comprises a step of producing a PTFE coating on the inner face (12) of the container (10) and **in that** the step of producing a hard anodising of the outer face (11) of the container (10) occurs before the step of producing a PTFE coating on the inner face (12) of the container (10).

6. Cooking vessel (1) comprising a container (10) having an aluminium outer face (11) as well as an inner face (12), at least the outer face (11) being anodised, a sol-gel coating being produced on the anodised outer face (11), where the outer face (11) is hard anodised to obtain a hard anodised layer, and **characterised in that** the hard anodised outer face (11) is coloured with mineral pigments and/or organic pigments and/or organic colourants trapped in the hard anodised layer, before the sol-gel coating step.

7. Cooking vessel (1) according to claim 6, **characterised in that** the container (10) is obtained by stamping of a substrate (13) having at least one aluminium face.

8. Cooking vessel (1) according to claim 7, **characterised in that** the substrate (13) has two aluminium faces.

9. Cooking vessel (1) according to one of claims 7 or 8, **characterised in that** the substrate (13) is made of solid aluminium.

10. Cooking vessel (1) according to claim 7, **characterised in that** the substrate (13) is formed by a column having an aluminium face and a stainless steel face.

11. Cooking vessel (1) according to claim 6, **characterised in that** the container (10) is made of cast aluminium.

12. Cooking vessel (1) according to one of claims 6 to 11, **characterised in that** the outer face (11) of the container (10) has a brushed or microbeaded surface.

13. Cooking vessel (1) according to one of claims 6 to 12, **characterised in that** the container (10) comprises at least one insert made of ferromagnetic material.

14. Cooking item (100) comprising a cooking vessel (1) and a gripping member (2) fixed on said cooking vessel (1) by at least one rivet (3) or by welding, **characterised in that** said cooking vessel (1) conforms with one of claims 6 to 13.

15. Electrical cooking appliance (200), comprising a cooking vessel (1) connected to heating means (250), **characterised in that** said cooking vessel (1) conforms with one of claims 6 to 13.
